# FASCICULE DE BREVET EUROPEEN

(11) **EP 1 715 680 B1**
(45) Date de publication et mention de la délivrance du brevet: **29.10.2008**
(21) Numéro de dépôt: 06290620.1
(22) Date de dépôt: 18.04.2006
(51) Int. Cl.: H04N 5/445, H04Q 7/24

(54) **Affichage d'une page numérique "Mosaïque" pour la télévision sur terminal mobile**
Anzeige einer digitalen "Mosaic" Seite bei mobilem Fernsehempfangsgerät
Display of a digital "Mosaic" page for television on a mobile terminal

(30) Priorité: 19.04.2005 FR 0550988
(43) Date de publication de la demande: 25.10.2006
(73) Titulaire: Bouygues Telecom, 92100 Boulogne Billancourt (FR)
(72) Inventeur: Fournier, Jean-Philippe, 91430 Igny (FR); Benkirane, Fahd, 75012 Paris (FR)
(74) Mandataire: Bredema

(56) Documents cités:
- WO-A-03/045064
- WO-A-20/04107749
- WO-A-20/05076503
- US-A1- 2002 087 973
- KORNFELD M: "DVB-H - the emerging standard for mobile data communication" CONSUMER ELECTRONICS, 2004 IEEE INTERNATIONAL SYMPOSIUM ON READING, UK SEPT. 1-3, 2004, PISCATAWAY, NJ, USA,IEEE, 1 septembre 2004 (2004-09-01), pages 193-198, XP010755771 ISBN: 0-7803-8527-6

## Description

La présente invention se rapporte au domaine des technologies de l'information et de la communication.

La présente invention se rapporte plus particulièrement à un procédé d'affichage d'une page numérique sur un terminal mobile avant, pendant, ou après une session de télévision numérique.

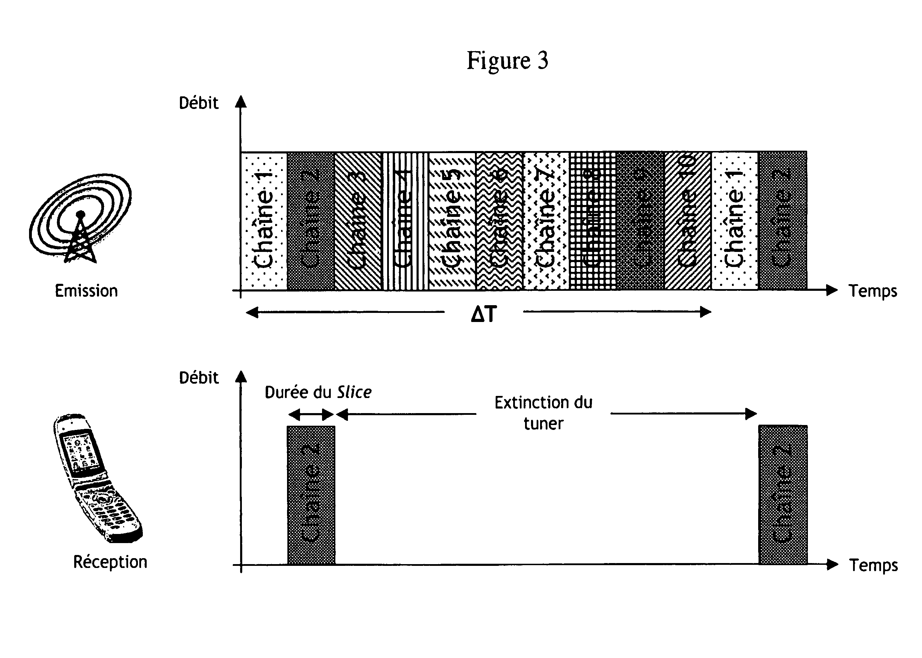

La norme DVB-H est la technologie privilégiée par les opérateurs de téléphonie mobile pour la diffusion de la télévision sur les terminaux de télécommunications mobiles. Or, la technologie DVB-H utilise une technique dite de *« Time-Slicing »* qui active le tuner DVB-H par intermittence et réduit ainsi la consommation des terminaux. Le principe de la technique de « Time-Slicing » est illustré Figure 3 : à la transmission, plusieurs chaînes sont diffusées par intervalles de temps successifs. A la réception, le tuner DVB-H recevant une chaîne:
- s'enclenche durant l'intervalle de temps correspondant à cette chaîne, recevant ainsi le programme audiovisuel et l'instant d'occurrence du prochain intervalle de temps,
- s'éteint durant les intervalles suivants,
- se réenclenche à l'intervalle de temps suivant correspondant à la chaîne.

L'inconvénient de cette technique est la durée importante qu'elle impliquera au zapping et qui atteindra vraisemblablement la dizaine de secondes. En effet, à chaque changement de chaîne, le tuner DVB-H se prépare à écouter une nouvelle série d'intervalles de temps, impliquant des délais supplémentaires notamment pour recevoir l'instant d'occurrence des intervalles et mettre le flux reçu dans la mémoire tampon du téléphone mobile. Ceci sera probablement très décevant pour les utilisateurs lorsqu'ils changeront de chaîne de télévision. Il devient essentiel de l'atténuer afin d'améliorer le ressenti pour l'utilisateur final.

Dans le cas où ces ou autres délais sont atténues au moyen de la présentation d'un page numérique du type "mosaïque" le temps de téléchargement de cette page devient aussi un inconvénient.

Il est connu de l'état de la technique, le document WO 03/045064 qui décrit un procédé de télécommunication permettant de recevoir différents services provenant d'un serveur de diffusion, dont des programmes de télévision. La navigation pour accéder à ces services se fait via une page numérique se présentant sous la forme d'un menu de sélection (*Electronic Program Guide*) communiquant avec un réseau de télécommunication mobile.

Il est également connu de l'état de la technique le document WO 04/107749 qui décrit un système de présentation de données multimédia pour différents types de plateformes, et notamment un téléphone mobile. Cette interface permet de naviguer dans une matrice d'images NxM et de sélectionner l'une d'elles pour observer le contenu qui lui est associé.

La présente invention entend remédier aux inconvénients de l'art antérieur en proposant d'afficher sur le terminal mobile une page numérique de type « mosaïque » qui présentera au client les chaînes disponibles dans une interface conviviale, qui pourrait présenter des informations sur les programmes en cours, que pourrait être mise à jour régulièrement pour rafraîchir les informations sur les programmes ou inclure de nouvelles chaînes disponibles et que pourrait s'afficher à chaque changement de canal.

À cet effet, la présente invention concerne, dans son acception la plus générale, un procédé de communication caractérisé en ce qu'il consiste à afficher une page numérique se présentant sous la forme d'une mosaïque composée d'une matrice d'images représentant chacune un lien vers une chaîne de télévision, ladite page numérique étant affichée avant, pendant ou après une session de télévision numérique, ladite page numérique étant en outre téléchargée au préalable et possède une date de présentation prédéterminée.

De préférence, le terminal est compatible avec la norme DVB-H et la session de télévision numérique est diffusée selon la norme DVB-H.
De préférence, la page est chargée depuis un serveur distant au travers d'un réseau de télécommunications mobiles ou du réseau DVB-H.
Selon un mode de mise en oeuvre, ledit réseau de télécommunications mobiles est de type GSM, GPRS, EDGE ou UMTS.

Selon une variante, ladite page numérique est mise à jour au début, ou pendant une session de télévision numérique.

De préférence, ladite page numérique est téléchargée au préalable et possède une date de présentation prédéterminée.

De préférence, ladite page numérique est au format HTML ou dans un format dérivé du HTML (xHTML).

Avantageusement, ladite page numérique est au format cHTML.

Selon une variante, ladite page numérique est au format WML.

On comprendra mieux l'invention à l'aide de la description, faite ci-après à titre purement explicatif, d'un mode de réalisation de l'invention, en référence aux figures annexées où :

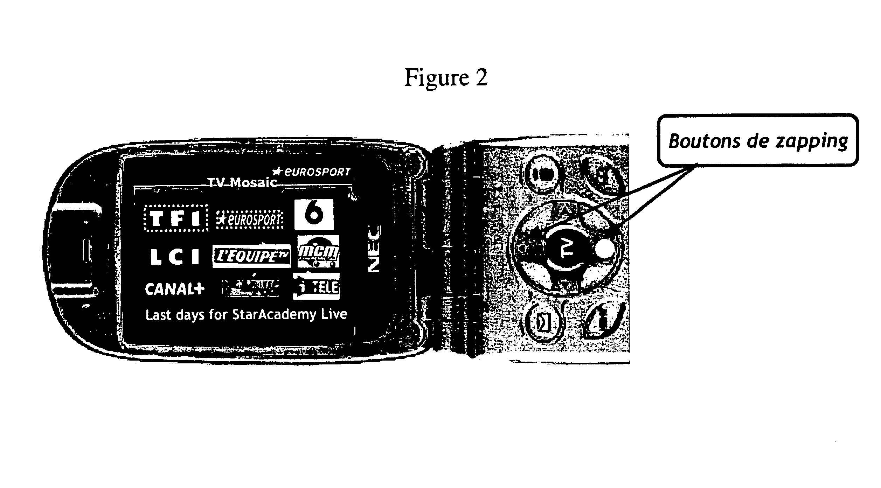

- les figures 1 et 2 illustrent chacune une page numérique vue dans le navigateur d'un terminal mobile, dans laquelle le procédé de communication selon l'invention est mis en oeuvre, et
- la figure 3 illustre le principe du *« Time-Slicing* ».

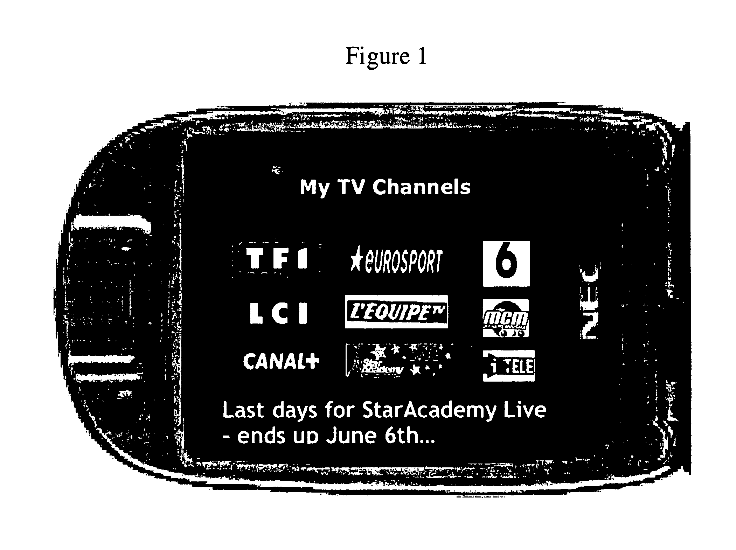

La page de télévision sur terminal mobile de type « mosaïque » est présentée Figure 1. Les avantages d'une telle page sont les suivants :
- cette page numérique permet de gérer les temps d'attente entre deux chaînes en affichant des éléments apportant l'information pertinente aux utilisateurs ;
- cette page numérique ne nécessite pas l'ajout de boutons spécifiques pour la télévision sur le terminal ;
- cette page numérique ne détourne pas des touches existantes du terminal qui sont déjà attribuées au navigateur ;
- cette page présente des informations sur les programmes en cours, sur les services interactifs, etc....

Afin de présenter des informations et des chaînes à jour, la page numérique se présentant sous la forme d'une mosaïque devra être mise à jour au début de chaque session de télévision. La voie cellulaire se prête le mieux au transport de la page numérique de type « mosaïque » et s'affichera plus rapidement que via le réseau DVB-H (trois secondes au lieu d'une dizaine de secondes).

La page numérique de type « mosaïque » pourra être téléchargée au démarrage de chaque session de télévision. Elle pourra également être mise à jour automatiquement en renseignant le champ « date d'expiration » dans l'entête des pages de type « mosaïque ».

Par exemple, on pourra avoir l'entête suivant :
Content-Type : Type du contenu.
Content-Location : URL du fichier numérique.
Content-Length : Longueur du contenu en octets.
X-DVBH-Expires : Date d'expiration DVBH (format TDT).
E-Tag : Identification de version de fichier (cf. RFC 2616).
X-DVBH-MDS : checksum MD5 du contenu.
X-DVBH-DATE : date de début de validité (format TDT). \r\n
Data

De la même façon, les pages mosaïques pourront être téléchargées au préalable et elles pourront avoir une date de présentation prédéfinie (toujours en utilisant les entêtes). Les pages numériques pourront être téléchargées à l'avance et présentées au début effectif des émissions.

La page mosaïque est présente en continu, et peut être affichée à tout moment de la session de la télévision numérique sur le terminal mobile.

Un des intérêts de cette page numérique de type « mosaïque » pour la télévision sur terminaux mobiles selon la présente invention est de réduire considérablement le temps d'attente ressenti en présentant une interface dynamique à la place d'un simple écran noir.

Pour changer de canal, l'utilisateur :
- utilisera les flèches droite/gauche du clavier, ce qui affichera la page numérique de type « mosaïque » pour la télévision sur terminaux mobiles selon l'invention tout en changeant le canal de réception OU BIEN
- cliquera sur le bouton « TV » pour afficher la page numérique de type « mosaïque » pour la télévision sur terminaux mobiles selon l'invention, choisira la chaîne désirée avec les flèches du clavier et validera son choix pour commencer la réception de la chaîne suivante
- appuiera sur le numéro 0, ce qui affichera la page numérique de type « mosaïque » pour la télévision sur terminaux mobiles selon l'invention ; il naviguera ensuite dans cette mosaïque pour sélectionner la chaîne désirée.

L'invention est décrite dans ce qui précède à titre d'exemple. Il est entendu que l'homme du métier est à même de réaliser différentes variantes de l'invention sans pour autant sortir du cadre du brevet défini dans les revendications.

## Revendications

1. Procédé de communication consistant à afficher sur un navigateur d'un terminal de télécommunications mobiles une page numérique se présentant sous la forme d'une mosaïque composée d'une matrice d'images représentant chacune un lien vers une chaîne de télévision, ladite page numérique étant affichée avant, pendant ou après une session de télévision numérique, **caractérisé en ce que** ladite page numérique est téléchargée au préalable et possède une date de présentation prédéterminée.

2. Procédé de communication selon la revendication 1, **caractérisé en ce que** le terminal est compatible avec la norme DVB-H et **en ce que** la session de télévision numérique est diffusée selon la norme DVB-H.

3. Procédé de communication selon la revendication 1, **caractérisé en ce que** la page est chargée depuis un serveur distant au travers d'un réseau de télécommunications mobiles.

4. Procédé de communication selon la revendication 3, **caractérisé en ce que** ledit réseau de télécommunications mobiles est de type GSM, GPRS, EDGE ou UMTS.

5. Procédé de communication selon la revendication 1 ou 2, **caractérisé en ce que** la page est chargée depuis un serveur distant au travers d'un réseau DVB-H.

6. Procédé de communication selon l'une quelconque des revendications précédentes, **caractérisé en ce qu'**il consiste à une mise à jour de ladite page numérique au début, ou pendant une session de télévision numérique.

7. Procédé de communication selon l'une quelconque des revendications précédentes, **caractérisé en ce que** ladite page numérique est au format HTML ou dans un format dérivé du HTML .

8. Procédé de communication selon la revendication 7, **caractérisé en ce que** ladite page numérique est au format cHTML.

9. Procédé de Communication selon l'une quelconque des revendications 1 à 6, **caractérisé en ce que** ladite page numérique est au format WML.

## Claims

1. A communication method consisting in displaying on the browser of a mobile telecommunication terminal a digital page in the form of a mosaic composed of an image matrix, each representing a link to a television channel, said digital page being displayed prior to, during or after a digital television session, **characterized in that** said digital page is previously downloaded and has a predetermined presentation date.

2. A communication method according to claim 1, **characterised in that** the terminal is compatible with the DVB-H standard and **in that** the digital television session is broadcast according to the DVB-H standard.

3. A communication method according to claim 1, **characterised in that** the page is downloaded from a distant server through a mobile telecommunication network.

4. A communication method according to claim 3, **characterised in that** said mobile telecommunication network is of the GSM, GPRS, EDGE or UMTS type.

5. A communication method according to claim 1 or 2, **characterised in that** the page is downloaded from a distant server, through a DVB-H network.

6. A communication method according to any one of the preceding claims, **characterised in that** it consists in updating said digital page at the beginning of, or during a digital television session.

7. A communication method according to any one of the preceding claims, **characterized in that** said digital page is in the HTML format, or in a format derived from HTML.

8. A communication method according to claim 7, **characterized in that** said digital page is in the cHTML format.

9. A communication method according to any one of claims 1 to 6, **characterized in that** said digital page is in the WML format.

## Patentansprüche

1. Kommunikationsverfahren, das darin besteht, auf einem Navigator eines Terminals für mobile Fernverbindungen eine Digitalseite anzuzeigen, die die Form eines Mosaiks hat, das aus einer Matrix mit Bildern besteht, von denen jedes einen Link zu einem Fernsehprogramm darstellt, wobei die besagte Digitalseite vor, während oder nach einer Verbindung mit Digitalfernsehen angezeigt wird, **dadurch gekennzeichnet, daß** die besagte Digitalseite vorher ferngeladen wird und ein vorbestimmtes Vorführdatum besitzt.

2. Kommunikationsverfahren nach Anspruch 1, **dadurch gekennzeichnet, daß** das Terminal mit der Norm DVB-H kompatibel ist, und **dadurch**, daß die Verbindung mit Digitalfernsehen nach der Norm DVB-H ausgestrahlt wird.

3. Kommunikationsverfahren nach Anspruch 1, **dadurch gekennzeichnet, daß** die Seite von einem systemfernen Server durch ein Netz für mobile Fernverbindungen heruntergeladen wird.

4. Kommunikationsverfahren nach Anspruch 3, **dadurch gekennzeichnet, daß** das besagte Netz für mobile Fernverbindungen von der Art GSM, GPRS, EDGE oder UMTS ist.

5. Kommunikationsverfahren nach Anspruch 1 oder 2, **dadurch gekennzeichnet, daß** die Seite von einem systemfernen Server durch ein DBV-H Netz heruntergeladen wird.

6. Kommunikationsverfahren nach einem beliebigen der vorstehenden Ansprüche, **dadurch gekennzeichnet, daß** es aus einer Aktualisierung der besagten Digitalseite zu Beginn oder während einer Verbindung mit Digitalfernsehen besteht.

7. Kommunikationsverfahren nach einem beliebigen der vorstehenden Ansprüche, **dadurch gekennzeichnet, daß** die besagte Digitalseite im HTML Format oder in einem von HTML abgeleiteten Format ist.

8. Kommunikationsverfahren nach Anspruch 7, **dadurch gekennzeichnet, daß** die besagte Digitalseite im cHTML Format ist.

9. Kommunikationsverfahren nach einem beliebigen der vorstehenden Ansprüche 1 bis 6, **dadurch gekennzeichnet, daß** die besagte Digitalseite im WML Format ist.
